# EUROPÄISCHE PATENTSCHRIFT

(11) **EP 1 270 292 B1**
(45) Veröffentlichungstag und Bekanntmachung des Hinweises auf die Patenterteilung: **10.01.2007**
(21) Anmeldenummer: 02011405.4
(22) Anmeldetag: 24.05.2002
(51) Int. Cl.: B60H 1/32

(54) **Verfahren zur Erkennung eines Kältemittelverlustes in einem Kältemittelkreislauf und Kälte- oder Klimaanlage**
Method for detecting refrigerant loss in a refrigerant circuit and cooling or air conditioning installation
Procédé permettant de détecter une fuite de réfrigérant dans un circuit de réfrigérant et installation frigorifique ou de conditionnement d'air

(30) Priorität: 27.06.2001 DE 10130986
(43) Veröffentlichungstag der Anmeldung: 02.01.2003
(73) Patentinhaber: Behr GmbH & Co. KG, 70469 Stuttgart (DE)
(72) Erfinder: Morgenstern, Stefan, 70499 Stuttgart (DE)
(74) Vertreter: Grosse, Rainer

(56) Entgegenhaltungen:
- US-A- 5 239 865
- US-A- 5 457 965
- US-A- 5 586 445

## Beschreibung

Die Erfindung betrifft ein Verfahren zur Erkennung eines Kältemittelverlustes in einem Kältemittelkreislauf einer wenigstens einen Kompressor und wenigstens einen Kondensator aufweisenden Kälte- oder Klimaanlage, gemäß Oberbegriff des Anspruchs 1.

Bei einer Kälte- oder Klimaanlage, beispielsweise für Fahrzeuge, die einen Kältemittelkreislauf aufweisen, kann in Folge betriebsbedingter Leckagen und durch Schäden beziehungsweise Materialermüdungen von Komponenten, wie zum Beispiel Dichtungen, Schläuche, Verbindungsstellen, ein Kältemittelverlust auftreten. Dies kann außer einem Leistungsverlust und Funktionsausfall auch zu Schäden an der Kälte- oder Klimaanlage, insbesondere an einem Kältemittelverdichter führen. Um dies zu vermeiden, werden Einrichtungen zum Erkennen eines Kältemittelverlusts eingesetzt.

Aus der DE 40 12 841 A1 ist ein Kältemittelkreislauf bekannt, der einen optischen Sensor zur Ermittlung einer Kältemittelunterfüllung aufweist. Mit Hilfe des Sensors kann an einer bestimmten Stelle des Kältemittelkreislaufs geprüft werden, ob ausreichend Kältemittel vorhanden ist, woraus auf einen Kältemittelverlust beziehungsweise -unterfüllung geschlossen werden kann.

Aus der DE 41 24 363 C2 geht eine Einrichtung zur Überwachung des Kältemittel-Füllstandes in einer Kälteanlage hervor, bei der mittels eines ersten Sensors der Druck und mit einem zweiten Sensor die Temperatur des Kältemittels nach einem Kondensator gemessen wird. Anhand dieser Messwerte wird eine Unterkühlung des Kältemittels ermittelt, die mit dem Wert für einen normal gefüllten Kältemittelkreislauf verglichen wird, wobei bei einer Abweichung auf eine Unterfüllung des Kältemittelkreislaufs geschlossen wird. Es hat sich gezeigt, dass mit diesem Verfahren der Kältemittel-Füllstand nur relativ ungenau ermittelt werden kann. Der Grund hierfür ist, dass die Abweichung der Unterkühlung bei einem Kältemittelverlust gegenüber der Unterkühlung bei einem normal gefüllten Kältemittelkreislauf nur wenige Kelvin (°K) beträgt. Da der eingesetzte Temperatursensor nicht derart genau messen kann, unterliegt die mittels der Einrichtung ermittelte Unterkühlung starken Schwankungen. Von Nachteil ist ferner, dass dieses Kältemittelfüllstand-Erkennungseinrichtung nicht bei allen Kälte- oder Klimaanlage in allen Betriebszuständen einsetzbar ist.

Das Dokument US 5 457 965 offenbart der Oberbegriff des Anspruch 1.

Es ist Aufgabe der Erfindung, ein Verfahren der eingangs genannten Art zu schaffen, das ein genaueres Erkennen eines Kältemittelverlusts in einem Kältemittelkreislauf ermöglicht. Ein weiteres Ziel besteht darin, eine Kälte- oder Klimaanlage zur Durchführung des Verfahrens zu schaffen, die vorzugsweise einen einfachen Aufbau aufweist und universell einsetzbar ist.

Zur Lösung der Aufgabe wird ein Verfahren mit den Merkmalen des Anspruchs 1 vorgeschlagen. Das Verfahren sieht vor, dass in einem ersten Schritt der Druck (p) und die Temperatur (T) des Kältemittels zwischen dem Kompressor und dem Kondensator gemessen werden. Im nächsten Schritt wird die gemessene, kältemitteldruckabhängige Kältemitteltemperatur (T) mit einem für diese Stelle des Kältemittelkreislaufs vorgegeben Grenzwert der Kältemitteltemperatur (Tₘₐₓ) bei einem Referenzdruck (p) des Kältemittels, der gleich groß wie der gemessene Kältemitteldruck (p) ist, verglichen. Sofern die gemessene Kältemitteltemperatur höher als die vorgegebene Grenztemperatur liegt, wird daraus auf einen unzulässig hohen Kältemittelverlust geschlossen. Das Verfahren zeichnet sich durch eine hohe sicherheit aus, insbesondere deshalb, weil keine Unterkühlung des Kältemittels gemessen wird, wie bei dem bekannten Verfahren.

In bevorzugter Ausführungsform ist der Kältemittel-Temperaturgrenzwert die maximal zulässige Temperatur des Kältemittels bei Referenzdruck, bei der beispielsweise eine Warnmeldung ausgegeben und/oder eine Abschaltung des Kältemittelkreislaufs erfolgt und bei der vorzugsweise eine Beschädigung einzelner Komponenten des Kältemittelkreislaufs in Folge eines Kältemittelverlustes noch mit Sicherheit ausgeschlossen werden kann.

Weitere vorteilhafte Ausführungsformen des Verfahrens ergeben sich aus den übrigen Unteransprüchen.

Zur Lösung der Aufgabe wird auch eine Kälte- oder Klimaanlage mit den Merkmalen des Anspruchs 5 vorgeschlagen. Sie zeichnet sich eine Einrichtung zur Erkennung eines Kältemittelverlustes des Kältemittelkreislaufs aus, die lediglich einen Druck-Temperatur-Sensor aufweist, mittels dessen sowohl der Druck als auch die Temperatur des Kältemittels in dem zwischen dem Kompressor und dem Kondensator liegenden Bereich des Kältemittelkreislaufs gemessen werden kann, wobei die Messwerte vorzugsweise mittels des erfindungsgemäßen Verfahrens bezüglich eines unzulässigen Kältemittel-Füllstandes ausgewertet werden. Vorteilhaft ist ferner, dass bestehende Kälte- oder Klimaanlagen mit der erfindungsgemäßen Kältemittelverlust-Erkennungseinrichtung ausgerüstet werden können, ohne dass hierfür besondere Anpassungen des Kältemittelkreislaufs erforderlich sind.

Im Folgenden wird die Erfindung anhand der Zeichnung näher erläutert. Es zeigen:
- Figur 1: ein Zustandsdiagramm eines in einem Kältemittelkreislauf befindlichen Kältemittels, und
- Figur 2: ein Temperatur-Druck-Diagramm für das Kältemittel zur Feststellung eines unzulässigen Kältemittelverlustes im Kältemittelkreislauf.

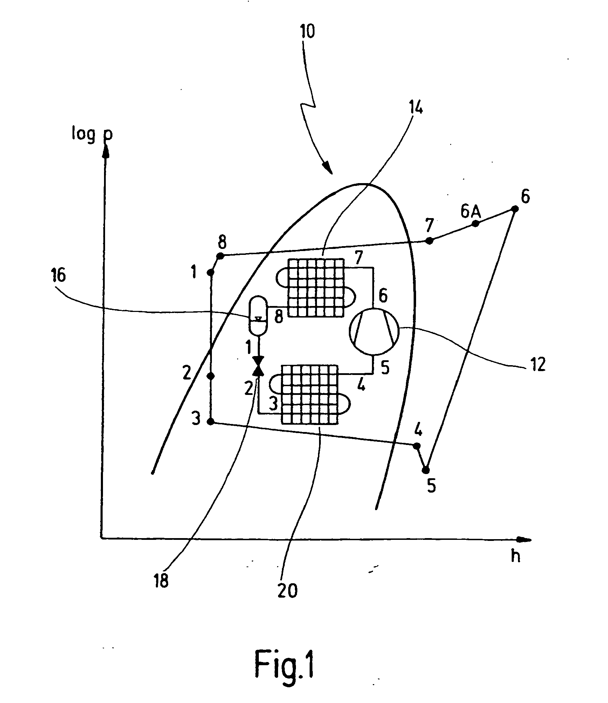

Figur 1 zeigt ein Zustandsdiagramm für ein in einem Kältemittelkreislauf einer Kälte- oder Klimaanlage 10 für Fahrzeuge vorhandenen Kältemittels und eine Prinzipskizze eines Ausführungsbeispiels der Kälteoder Klimaanlage 10. In dem Zustandsdiagramm ist auf der Abszissenachse die Enthalpie h des Kältemittels und auf der Ordinatenachse dessen Druck p im logarithmischen Maßstab aufgetragen. Mit durchgezogener Linie ist der Zustand des Kältemittels während des geschlossenen Kreisprozesses dargestellt, wobei die Kältemittelzustände vor und nach den vorgenannten Einrichtungen der Kälte- oder Klimaanlage 10 mit Bezugsziffern 1 bis 8 gekennzeichnet sind.

Die Kälte- oder Klimaanlage 10 weist einen Kompressor 12, einen Kondensator 14, einen Kältemittelbehälter 16, ein Expansionsventil 18, einen Verdampfer 20 sowie eine nicht dargestellte Steuereinrichtung auf. Mittels der Steuereinrichtung wird zumindest der Kompressor 12 angesteuert. Der Aufbau und die Funktion der Kälte- oder Klimaanlage 10 ist allgemein bekannt, so dass hier nicht näher darauf eingegangen wird.

Die Kälte- oder Klimaanlage 10 umfasst ferner eine nicht dargestellte Einrichtung zur Erkennung eines Kältemittelverlustes des Kältemittelkreislaufs, die einen Druck-Temperatur-Sensor umfasst, mit dem der Druck und die Temperatur des Kältemittels in dem Kältemittelkreislauf der Kälte- oder Klimaanlage 10 in dem Bereich zwischen dem Kompressor 12 und dem Kondensator 14 gemessen wird, was dem im Zustandsdiagramm dargestellten Punkt 6A entspricht. Die gemessenen Werte werden an die Steuereinrichtung übertragen und von dieser hinsichtlich eines unzulässigen Kältemittelverlustes im Kältemittelkreislauf ausgewertet. Hierzu weist die typischerweise eine Regelelektronik umfassende Steuereinrichtung einen Eingang für den Druck-Temperatur-Sensor und eine entsprechende Auswertelogik zur Durchführung des erfindungsgemäßen Verfahrens auf. Auf die Auswertelogik wird im Folgenden noch näher eingegangen.

Wenn sich im Kältemittelkreislauf zu wenig Kältemittel befindet, wird das Kältemittel in dem zwischen den Punkten 3 und 4 stattfindenden Verdampfungsprozess auf eine höhere Temperatur erwärmt, als wenn sich im Kältemittelkreislauf mehr Kältemittel befinden würde. Mit abnehmendem Füllstand des Kältemittelkreislaufs wird der Punkt 4 im Diagramm immer weiter nach rechts verschoben, so dass nach der zwischen den Punkten 5 und 6 stattfindenden Verdichtung auch der Punkt 6 weiter rechts liegen wird. Zur Feststellung eines Kältemittelverlustes wird daher der Druck und die Temperatur des Kältemittels im Punkt 6A, also nach dem Kompressor 12 und noch vor dem Kondensator 14 gemessen und diese Werte mittels der Auswertelogik mit dem "Normalfall", bei dem davon ausgegangen wird, dass ein gewünschter Kältemittelfüllstand im Kältemittelkreislauf vorliegt, verglichen.

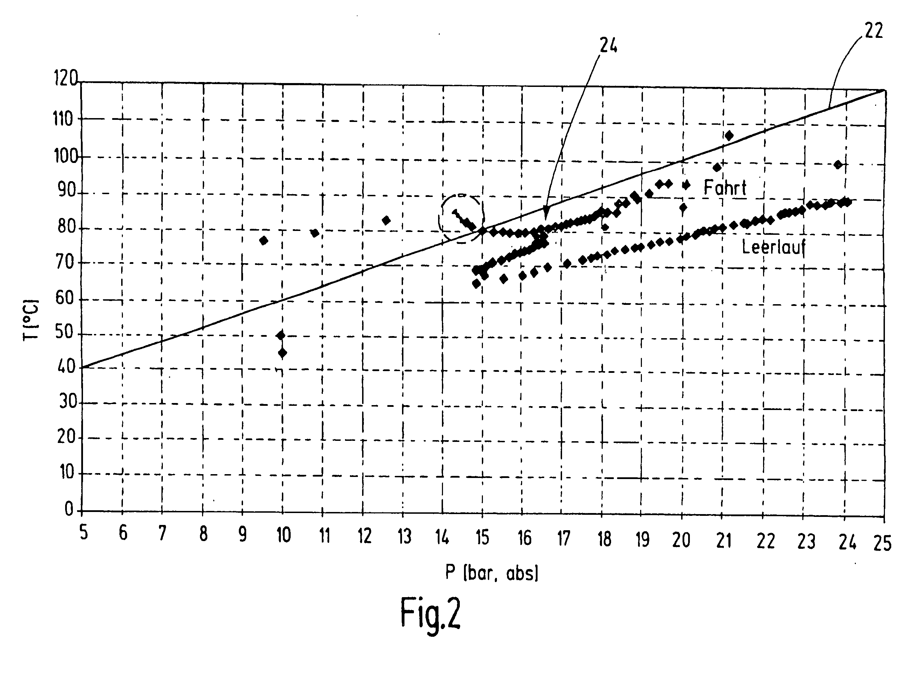

Figur 2 zeigt ein der Auswertelogik zugrundeliegendes Diagramm, in dem auf der Abszissenachse der absolute Druck in bar und auf der Ordinatenachse die Temperatur in °C des Kältemittels im Kältemittelkreislauf zwischen dem Kompressor 12 und dem Kondensator 14 aufgetragen sind. In dem Diagramm sind einzelne Messpunkte für verschiedene Fahrzustände eines die Kälte- oder Klimaanlage 10 aufweisenden Fahrzeugs eingezeichnet. Es ist ersichtlich, dass sich die im Leerlauf und während der Fahrt ermittelten Messpunkte jeweils im Wesentlichen einer gedachten, von links nach rechts ansteigenden Geraden befinden. Es wird deutlich, dass die Temperatur des Kältemittels im Kältemittelkreislauf zwischen dem Kompressor und dem Kondensator bei gleichem Referenzdruck während der Fahrt in Folge der höheren Drehzahl des vom Motor des Fahrzeugs angetriebenen Kompressors höher ist als im Leerlauf.

In dem Diagramm ist ferner eine Grenzlinie 22 eingezeichnet, die bei diesem Ausführungsbeispiel eine Gerade ist. Die Grenzlinie 22 wird vorzugsweise empirisch ermittelt und legt die Grenze fest, ab welcher Temperatur des Kältemittels bei einem bestimmten Druck (Referenzdruck) desselben eine unzulässige Unterfüllung des Kältemittelkreislaufs vorliegt. Die Grenzlinie kann in Abhängigkeit von der Kompressordrehzahl und/oder der Außentemperatur und/ oder der Lufttemperatur am Verdampferaustritt variabel sein. Wenn also die Messpunkte oberhalb der Grenzlinie 22 liegen, ist eine unzulässige Unterfüllung des Kältemittelkreislaufs aufgetreten. Wie aus dem Diagramm ersichtlich, darf beispielsweise bei einem Referenzdruck p von 10 bar die maximal zulässige Kältemitteltemperatur (T) nicht größer sein als circa 60 C.

In dem Diagramm sind ferner weitere Messpunkte eingezeichnet, die während der Fahrt bei einem im Kältemittelkreislauf auftretenden Kältemittelverlust in Folge einer Leckage mit Hilfe des Druck-Temperatur-Sensors ermittelt wurden. Mit sinkendem Füllstand des Kältemittelkreislaufs wandern die Messpunkte -ausgehend von einer Stelle 24, an der die Leckage aufgetreten ist- nach oben. Die mit gestrichelter Linie eingekreisten Messpunkte liegen oberhalb der Grenzlinie 22, was bedeutet, dass ein unzulässig hoher Kältemittelverlust im Kältemittelkreislauf erreicht wurde beziehungsweise vorliegt.

Aus der Beschreibung zu den Figuren 1 und 2 ergibt sich die folgende Ausführungsform des erfindungsgemäßen Verfahrens ohne weiteres. Es sieht vor, den Druck und die Temperatur des Kältemittels im Kältemittelkreislauf zwischen dem Kompressor und dem Kondensator zu messen, was vorzugsweise kontinuierlich erfolgt, wobei bei jeder Messung ein Messpunkt ermittelt wird, der daraufhin überprüft wird, ob er oberhalb von der in dem aus Figur 2 hervorgehenden Diagramm eingezeichneten Grenzlinie 22 liegt. Ist dies der Fall, wird ein unzulässig hoher Kältemittelverlust im Kältemittelkreislauf festgestellt und entsprechende Maßnahmen eingeleitet, beispielsweise Ausgabe einer Warnmeldung oder Abschalten der Kälte- oder Klimaanlage 10, insbesondere des Kompressors 12.

Die vorstehend beschriebene Einrichtung zur Erkennung eines Kältemittelverlustes des Kältemittelkreislaufs ist für verschiedenste Kälte- oder Klimaanlagen, beispielsweise mit oder ohne thermostatischem Expansionsventil, einsetzbar.

## Patentansprüche

1. Verfahren zur Erkennung eines Kältemittelverlustes in einem Kältemittelkreislauf einer wenigstens einen Kompressor und wenigstens einen Kondensator aufweisenden Kälte- oder Klimaanlage, insbesondere für Fahrzeuge, wobei auf der Hochdruckseite des Kältemittelkreislaufs der Druck (p) und die Temperatur (T) des Kältemittels gemessen und diese Messergebnisse hinsichtlich eines möglichen Kältemittelverlustes ausgewertet werden, wobei der Druck (p) und die Temperatur (T) des Kältemittels zwischen dem Kompressor und dem Kondensator gemessen werden, die gemessene, vom Kältemitteldruck (p) abhängige Kältemitteltemperatur (T) mit einem für diese Stelle des Kältemittelkreislaufs vorgegeben Grenzwert der Kältemitteltemperatur (Tₘₐₓ) bei einem Referenzdruck (p) des Kältemittels, der gleich groß wie der gemessene Kältemitteldruck (p) ist, verglichen wird, und bei einem Überschreiten dieses Grenzwerts ein unzulässig hoher Kältemittelverlust festgestellt wird, **dadurch gekennzeichnet dass**, innerhalb eines vorgegebenen Bereichs für jeden Kältemitteldruck (p) ein Grenzwert der Kältemitteltemperatur (Tₘₐₓ) festgelegt wird und die Grenzwerte auf einer Grenzlinie (22) liegen, die als Gerade ausgebildet ist, wobei die Grenzlinie (22) von der Drehzahl des Kompressors und/oder der Außentemperatur und/oder der Lufttemperatur an dem Austritt eines im Kältemittelkreislauf angeordneten Verdampfers abhängig ist.

2. Verfahren nach Anspruch 1, **dadurch gekennzeichnet, dass** bei Feststellung eines unzulässig hohen Kältemittelverlusts eine Warnmeldung und/oder eine Abschaltung der Kälteanlage erfolgt.

3. Verfahren nach Anspruch 1, **dadurch gekennzeichnet, dass** der Grenzwert der Kältemitteltemperatur (T) bei einem bestimmten Referenzdruck (p) und bei einem vorzugsweise gerade noch zulässigen Kältemittelfüllstand im Kältemittelkreislauf empirisch ermittelt wird.

## Claims

1. A method for detecting refrigerant loss in a refrigerant circuit of a refrigeration or air-conditioning system comprising at least one compressor and at least one condenser, in particular for vehicles, wherein the pressure (p) and the temperature (T) of the refrigerant are measured on the high-pressure side of said refrigerant circuit and the measurement results are evaluated with regard to potential refrigerant loss, wherein the pressure (p) and the temperature (T) of the refrigerant are measured between the compressor and the condenser, the measured refrigerant temperature (T) which depends on the refrigerant pressure (p) is compared with a refrigerant temperature limit value (Tₘₐₓ) specified for that point in the refrigerant circuit at a reference pressure (p) of the refrigerant which is equal to the measured refrigerant pressure (p) and, if this limit value is exceeded, an impermissibly high refrigerant loss is detected,
**characterized in that**, within a specified range, a refrigerant temperature limit value (Tₘₐₓ) is defined for each refrigerant pressure (p) and the limit values are arranged on a limit line (22) which is formed as a straight line, wherein said limit line (22) depends on the speed of the compressor and/or the outside temperature and/or the air temperature at the exit of an evaporator arranged in the refrigerant circuit.

2. The method according to claim 1, **characterized in that** the refrigeration system emits a warning and/or is switched off if an impermissibly high refrigerant loss is detected.

3. The method according to claim 1, **characterized in that** the limit value of the refrigerant temperature (T) at a specific reference pressure (p) and a refrigerant filling level in the refrigerant circuit that is, preferrably, just permissible is determined by means of an empirical method.

## Revendications

1. Procédé permettant de détecter une fuite de réfrigérant dans un circuit de réfrigérant d'une installation frigorifique ou de conditionnement d'air comportant au moins un compresseur et au moins un condensateur, en particulier pour des véhicules automobiles, la pression (p) et la température (T) du réfrigérant étant mesurées du côté haute pression du circuit de réfrigérant et ces résultats de mesure étant évalués quant à une fuite possible de réfrigérant, la pression (p) et la température (T) du réfrigérant étant mesurées entre le compresseur et le condensateur, la température (T) mesurée du réfrigérant, dépendante de la pression (p) du réfrigérant, étant comparée avec une valeur limite de la température (Tₘₐₓ) du réfrigérant, laquelle valeur limite est spécifiée pour cet endroit du circuit de réfrigérant, à une pression de référence (p) du réfrigérant qui est la même que la pression (p) mesurée du réfrigérant, et une fuite de réfrigérant inadmissiblement élevée étant constatée au dépassement de cette valeur limite, **caractérisé en ce que**, à l'intérieur d'une plage donnée, pour chaque pression (p) du réfrigérant, une valeur limite de la température (Tₘₐₓ) du réfrigérant est déterminée et les valeurs limites se trouvent sur une ligne limite (22) qui se présente sous la forme d'une droite, la ligne limite (22) dépendant du régime du compresseur et/ou de la température extérieure et/ou de la température de l'air à la sortie d'un évaporateur situé dans le circuit de réfrigérant.

2. Procédé selon la revendication 1, **caractérisé en ce que**, à la constatation d'une fuite de réfrigérant inadmissiblement élevée, une signalisation d'avertissement et/ou une coupure de l'installation frigorifique se produisent.

3. Procédé selon la revendication 1, **caractérisé en ce que** la valeur limite de la température (T) du réfrigérant est déterminée empiriquement à une pression de référence (p) certaine et pour un niveau de réfrigérant de préférence juste encore admissible dans le circuit de réfrigérant.
